# EUROPÄISCHE PATENTSCHRIFT

(11) **EP 1 301 734 B1**
(45) Veröffentlichungstag und Bekanntmachung des Hinweises auf die Patenterteilung: **24.03.2004**
(21) Anmeldenummer: 01965085.2
(22) Anmeldetag: 07.07.2001
(51) Int. Cl.: F16H 15/38

(54) **STUFENLOSES REIBRADGETRIEBE**
STEPLESS FRICTION DRIVE
BOITE DE VITESSES A FRICTION A TRANSMISSION CONTINUE

(30) Priorität: 15.07.2000 DE 10034454
(43) Veröffentlichungstag der Anmeldung: 16.04.2003
(73) Patentinhaber: ZF FRIEDRICHSHAFEN Aktiengesellschaft, 88038 Friedrichshafen (DE)
(72) Erfinder: SICH, Bernhard, 88045 Friedrichshafen (DE); MATHEIS, Axel, 88605 Sauldorf (DE)
(86) Internationale Anmeldenummer: PCT/EP2001/007824
(87) Internationale Veröffentlichungsnummer: WO 2002/006702

(56) Entgegenhaltungen:
- EP-A- 0 882 910
- EP-A- 0 933 559
- DE-A- 19 754 725
- DE-A- 19 826 057
- US-A- 5 820 512
- PATENT ABSTRACTS OF JAPAN vol. 2000, no. 04, 31. August 2000 (2000-08-31) -& JP 2000 018355 A (NISSAN MOTOR CO LTD), 18. Januar 2000 (2000-01-18)

## Beschreibung

Die vorliegende Erfindung betrifft ein stufenloses Reibradgetriebe nach dem Oberbegriff des Anspruchs 1.

Ein derartiges stufenloses Reibradgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangsund Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheiben hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist.

Ein stufenloses Reibradgetriebe ist in der DE A 197 54 725 der Anmelderin beschrieben. Dieses Getriebe weist eine Eingangswelle auf, die mit einem Drehmomentwandler oder einer naßlaufenden Anfahrkupplung einer Antriebsmaschine eines Kraftfahrzeuges verbunden ist, wobei es mit zwei koaxial zur Eingangswelle angeordneten Getriebeeinheiten versehen ist. Die Eingangsscheiben und die Ausgangsscheiben sind auf einer Drehmomentwelle gelagert, die geringfügig in Axialrichtung relativ zur Eingangswelle verschiebbar ist. Die beiden Eingangsscheiben sind dabei drehfest mit der Drehmomentwelle, jedoch axial gleitend, auf ihr gelagert. Eine rollenförmige Anpreßeinrichtung ist in Axialrichtung verschiebbar auf der Eingangswelle gelagert und drehfest mit ihr verbunden und beaufschlagt eine der Eingangsscheiben in Axialrichtung zur zugehörigen Ausgangsscheibe hin. Die oberen Enden der Träger, welche die Reibräder tragen, greifen in zwei Aussparungen im Gehäuse ein und sind dort drehbar gelagert, während ihre unteren Enden in Aussparungen in einer entsprechenden Halterung eingreifen und zwar unter Zwischenschaltung eines Hydraulikkolbens, der derart angeordnet ist, dass bei entsprechender Beaufschlagung der Kolbenoberseite bzw. der Kolbenunterseite eine geringfügige Anhebung bzw. Absenkung des entsprechenden Trägers erfolgt, wobei der Verschiebeweg üblicherweise etwa 2 mm beträgt. Die Reibräder selbst sind in Aussparungen in den Trägern eingesetzt und exzentrisch darin gelagert, wobei ein Exzenterabschnitt den zugehörigen Träger durchsetzt und der andere Exzenterabschnitt eines der Reibräder trägt. Diese exzentrische Lagerung dient der axialen Ausgleichsbewegung der Reibräder in Längsrichtung des Getriebes; durch die Auslenkbewegung des Exzenters wird ein Nachführen der Reibräder bei einer elastischen Verformung der Eingangs- bzw. Ausgangsscheiben ermöglicht, wobei diese Auslenkbewegung dabei eine Kreisbahn beschreibt. Diese Exzenterlagerung bedingt jedoch noch einen hohen Bauaufwand mit entsprechend großem Lagerbedarf, wobei durch die kreisförmige Auslenkbewegung des Exzenters Regelfehler auftreten können, welche ungewollte Übersetzungsverhältnisse bedingen.

Da die Verstellung der Übersetzung bei diesen stufenlosen Reibradgetrieben durch Verschiebung des Reibrades tangential zur Getriebeachse erfolgt, können noch Schwenkkräfte von den Antriebs- und Abtriebsscheiben auf das Reibrad einwirken, da diese zur Momentenübertragung an das Reibrad gepreßt werden müssen. Das Reibrad ist bei den bekannten stufenlosen Reibradgetrieben derart in jeder Getriebeeinheit angeordnet, dass seine Schwenkachse im Mittelpunkt des durch die zugehörigen Antriebs- und Abtriebsscheiben gebildete Torus angeordnet ist. In den Kontaktpunkten des Reibrades mit der zugehörigen Antriebsscheibe bzw. Abtriebsscheibe werden sogenannte Normalkräfte bei der Verstellung der Übersetzung erzeugt. Damit das dadurch bedingte am Reibrad auftretende Drehmoment keine unerwünschte Veränderung der Getriebeübersetzung hervorruft, wurde bereits in der DE A 198 26 057 der Anmelderin vorgeschlagen, dass zur Steuerung der Übersetzung die Differenz der Normalkräfte, die durch die Anpreßkräfte der zugehörigen Ausgangsscheibe und Eingangsscheibe auf jedes Rad einwirken, durch Erzeugung einer Steuerkraft kompensiert wird, wobei bei axial gehaltenem Reibrad diese Steuerkraft, die zur Verdrehung des Reibrades führt, an einer der beiden zugehörigen Scheiben aufgebracht werden kann, während bei axialer Fixierung einer der Scheiben diese Steuerkraft auf das Reibrad einwirken kann.

Aus der US 5 820 512 A ist ein stufenloses Reibradgetriebe gemäß dem Oberbegriff des Anspruchs 1 bekannt, wobei eine Ausgleichsanordnung für Anpreßkräfte vorhanden ist. Das untere Ende eines jeden Trägers ist über einen Stift mit dem Rest des Trägers verbunden, so dass Verformungen aufgenommen werden können.

Aufgabe der vorliegenden Erfindung ist es, den konstruktiven Aufbau eines stufenlosen Reibradgetriebes zu verringern und gleichzeitig unerwünschte Übersetzungsabweichungen aufgrund von elastischen Verformungen, insbesondere der Eingangs- bzw. Ausgangsscheiben, bei deren Anpreßung an das Reibrad zu vermeiden.

Die Lösung dieser Aufgabe erfolgt mit den im Anspruch 1 angegebenen Merkmalen; vorteilhafte Ausgestaltungen sind in den Unteransprüchen beschrieben.

Die Erfindung geht aus von der Erkenntnis, dass durch die Anpressung der Eingangs- und Ausgangsscheiben an die Reibräder mit der zur Erzeugung der zur Kraftübertragung notwendigen Reibkraft elastische Verformungen im stufenlosen Reibradgetriebe auftreten können, wobei insbesondere die Eingangs- bzw. Ausgangsscheiben davon betroffen sind. Um den Reibkontakt und damit die Kraftübertragung auch bei elastischer Verformung dieser Bauteile zu gewährleisten, ist erfindungsgemäß eine Ausgleichsanordnung vorgesehen, die es dem Reibrad ermöglicht, eine entsprechende Ausgleichsbewegung durchzuführen. Diese erfindungsgemäße Ausgleichsanordnung, die zwischen dem unteren Ende eines jeden Trägers für die Reibräder und dem Hydraulikkolben für deren Vertikalverschiebung vorgesehen ist, besteht erfindungsgemäß aus einer oberen Lagerschale, einer unteren Lagerschale, einem Käfig und aus in dem Käfig und zwischen den beiden Lagerschalen in vorgegebener Anordnung eingesetzten Kugeln. Zugleich wird die Ausgleichsanordnung von einer Zuganordnung mittig durchsetzt, die das untere Ende des Trägers mit dem Hydraulikkolben in einstellbarer Weise verbindet. Diese Einstellung der Spannkraft der Zuganordnung kann mittels einer Spanneinrichtung, insbesondere einer Spannschraube, erfolgen.

Die erfindungsgemäße Ausgestaltung eines stufenlosen Reibradgetriebes, die keinerlei exzentrische Lagerung der Reibräder in den Trägern mehr benötigt, führt damit zu einer erheblichen Reduzierung des Bauaufwandes, da nicht nur die Exzenter, sondern auch deren Lager entfallen.

Im folgenden wird die Erfindung anhand der Zeichnung näher erläutert, in der ein vorteilhaftes Ausführungsbeispiel dargestellt ist.
Es zeigen:
- Fig. 1: schematisch einen Teilschnitt durch eine Getriebeeinheit,
- Fig. 2: einen teilweisen Radialschnitt durch die Trägeranordnung,
- Fig. 3: einen Axialschnitt durch die Trägeranordnung, und
- Fig. 4: eine Draufsicht auf die Ausgleichsanordnung.

Da derartige stufenlose Reibradgetriebe dem Fachmann gut bekannt sind, werden im folgenden in der Beschreibung und in der beigefügten Zeichnung nur die für das Verständnis der Erfindung notwendigen Teile beschrieben und dargestellt.

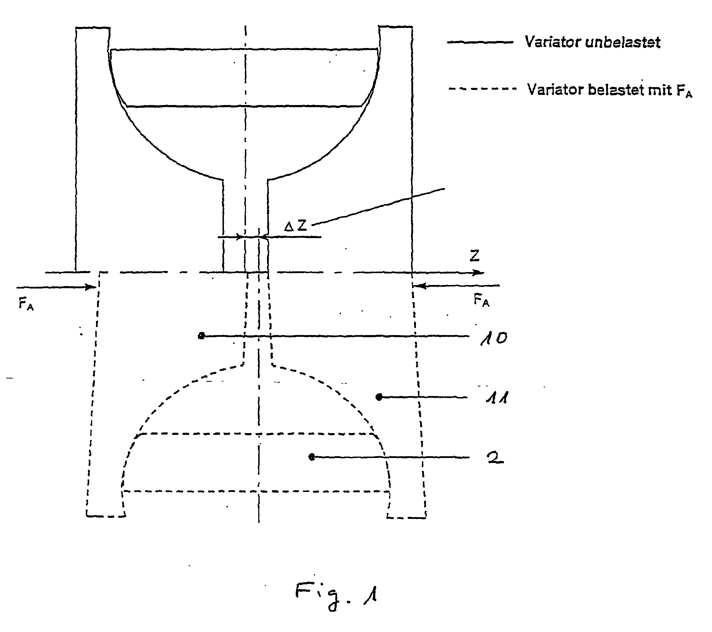

Wie Fig. 1 erkennen läßt, in deren oberen Hälfte eine Eingangsscheibe 10, eine Ausgangsscheibe 11 und ein Reibrad 2 im unbelasteten Zustand und in deren unterer Hälfte diese Bauteile im belasteten Zustand gestrichelt dargestellt sind, wird durch die Anpressung der beiden Scheiben 10, 11 an das Reibrad 2 mit der Kraft F_{A}, das heißt der zur Erzeugung der Kraftübertragung notwendigen Reibkraft, eine elastische Verformung der beiden Scheiben 10, 11 bewirkt. Um den Reibkontakt und damit die Kraftübertragung auch bei elastischer Verformung der Scheiben 10, 11 zu gewährleisten, muß das Reibrad 2 eine entsprechende Ausgleichsbewegung ΔZ durchführen.

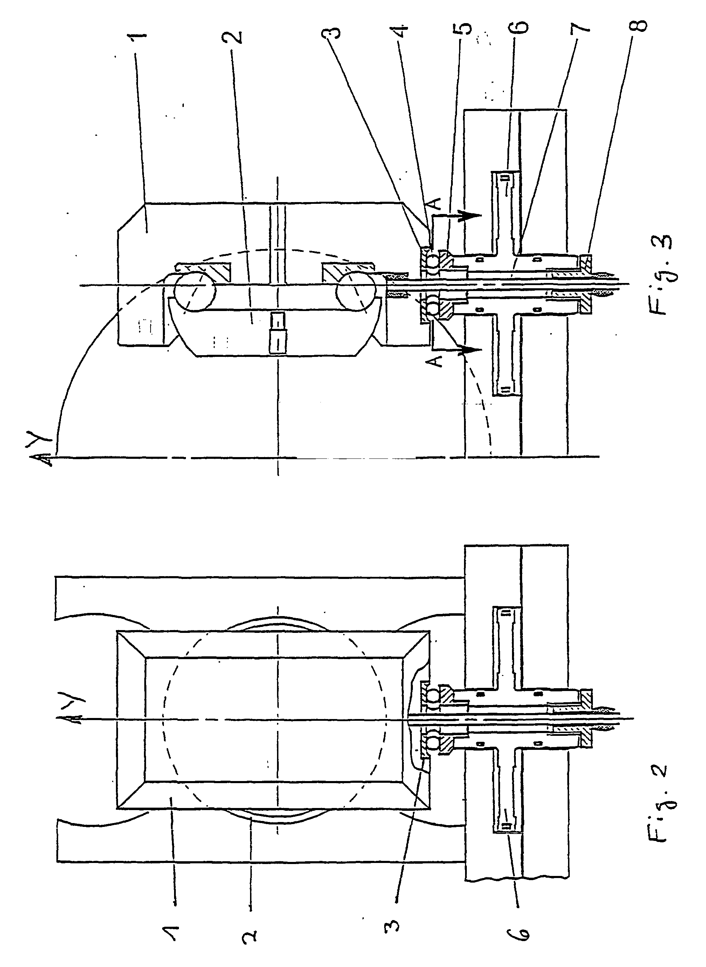

Fig. 2 und 3 zeigen, wobei Fig. 3 eine um 90° zu Fig. 2 versetzte Darstellung ist, einen Radialschnitt bzw. einen Axialschnitt durch einen Träger für ein Reibrad. Mit 1 ist dabei der Träger bezeichnet, mit 2 das Reibrad und mit 6 der Hydraulikkolben, der mit dem Träger 1 in Verbindung steht.

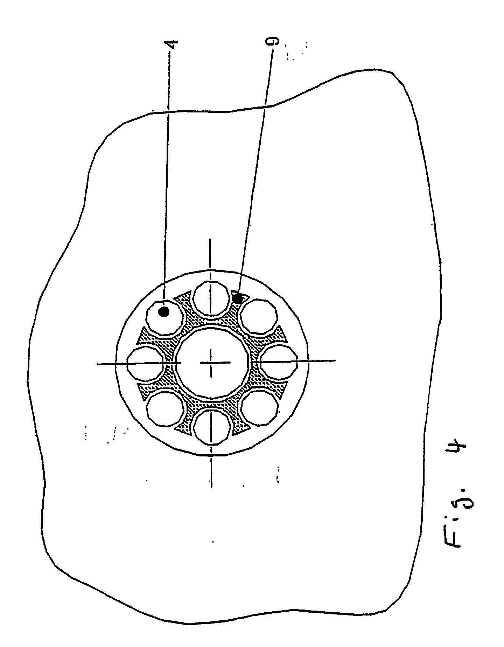

Erfindungsgemäß ist nun am unteren Ende des Trägers 1 für das Reibrad 2 und oberhalb des Hydraulikkolbens 6 eine Ausgleichsanordnung vorgesehen, die aus einer oberen Lagerschale 3, einer unteren Lagerschale 5 und dazwischen angeordneten Kugeln 4 besteht, die durch einen Käfig 9 (Fig. 4) in der vorgegebenen Anordnung gehalten werden.

Die Ausgleichsanordnung wird zugleich von einer Zuganordnung 7 mittig durchsetzt, die einerseits fest am Träger 1 angeordnet ist und andererseits über eine Spanneinrichtung 8 mit dem Hydraulikkolben 6 in einstellbarer Weise verbunden ist. Die Einstellung der Spannkraft der Zuganordnung 7 kann durch die angedeutete Spanneinrichtung, beispielsweise eine Spannschraube, erfolgen.

Die Ausgleichsanordnung ermöglicht Differenzbewegungen zwischen dem Hydraulikkolben 6 und dem Träger 1 in der X-Z-Ebene, jedoch nicht Y-Richtung. Die Kraftübertragung vom Hydraulikkolben 6 auf den Träger 1 erfolgt bei Druckbeanspruchung über die Ausgleichsanordnung. Die Zugkräfte werden durch die mit dem Hydraulikkolben 6 verbundene Zuganordnung 7 übertragen, die andererseits fest mit dem Träger 1 verbunden ist.

Die erfindungsgemäße Ausgestaltung des Trägers mit der eingesetzten Ausgleichsanordnung vermindert den Bauaufwand gegenüber der herkömmlichen Exzenterlösung für die Lagerung des Reibrades 2 und verhindert zugleich, dass Regelabweichungen und damit ungewollte Übersetzungsänderungen auftreten. Ferner ist auch der Hydraulikkolben 6 in der X-Z-Ebene weitgehend vom Träger 1 entkoppelt.

### Bezugszeichen

- 1: Träger
- 2: Reibrad
- 3: Lagerschale
- 4: Kugel
- 5: Lagerschale
- 6: Hydraulikkolben
- 7: Zuganordnung
- 8: Spanneinrichtung
- 9: Käfig

## Patentansprüche

1. Stufenloses Reibradgetriebe, mit:
einem Gehäuse,
einer Eingangswelle,
einer koaxial dazu angeordneten Drehmomentwelle,
zwei koaxial zur Eingangswelle angeordneten Eingangsscheiben mit toroidförmigen Innenflächen,
zwei koaxial zur Eingangswelle angeordneten Ausgangsscheiben mit toroidförmigen Innenflächen,
wobei je eine Eingangsscheibe und eine Ausgangsscheibe ein Paar bilden und die beiden Ausgangsscheiben spiegelsymmetrisch zueinander und nebeneinander angeordnet sind, mehreren Reibrädern, die zwischen den Innenflächen der Paare aus Eingangsscheiben und Ausgangsscheiben verschwenkbar angeordnet sind zur Übertragung eines Drehmomentes von der Eingangsscheibe auf die zugehörige Ausgangsscheibe, einem Träger für jedes Reibrad,
einer Verschwenkeinrichtung für die Träger der Reibräder, einer Anpressanordnung für eine der Eingansgscheiben, um diese in Richtung Ausgangsscheiben zu beaufschlagen,
eine Ausgangswelle, und
einer Zahnradanordnung zwischen Ausgangsscheiben und Eingangswelle, wobei zwischen dem unteren Ende eines jeden Trägers (1) für die Reibräder (2) und dem Hydraulikkolben (6) eine Ausgleichsanordnung vorgesehen ist, und wobei die Ausgleichsanordnung von einer Zuganordnung (7) mittig durchsetzt wird, die das untere Ende des Trägers (1) mit dem Hydraulikkolben (6) in einstellbarer Weise verbindet,
**dadurch gekennzeichnet, dass** die Ausgleichsanordnung aus einer oberen Lagerschale (3), einer unteren Lagerschale (5), einem Käfig (9) und aus in den Käfig und zwischen den beiden Lagerschalen eingesetzten Kugeln (4) besteht.

2. Reibradgetriebe nach Anspruch 1, **dadurch gekennzeichnet, dass** zur Einstellung der Spannkraft der Zuganordnung (7) eine Spanneinrichtung (8) vorgesehen ist.

3. Reibradgetriebe nach Anspruch 2, daduarch gekennzeichnet, dass die Spanneinrichtung (8) eine Spannschraube ist.

## Claims

1. Continuously variable friction transmission, with:
a casing,
an input shaft,
a torque shaft arranged coaxially with the latter,
two input discs with toroidal inner surfaces arranged coaxially with the input shaft,
two output discs with toroidal inner surfaces arranged coaxially with the input shaft,
one input disc and one output disc respectively forming a pair and the two output discs being arranged in mirror symmetry to one another and adjacent to one another,
a plurality of friction wheels, which are arranged to be able to swing horizontally between the inner surfaces of the pairs of input discs and output discs to transmit a torque from the input disc to the related output disc,
a carrier for each friction wheel,
a horizontal swing device for the carriers of the friction wheels,
a contact pressure device for one of the input discs, to act on this in the direction of the output discs,
an output shaft, and
a toothed wheel arrangement between output discs and input shaft,
an equalization arrangement being provided between the lower end of each carrier (1) for the friction wheels (2) and the hydraulic piston (6), and the equalization device being penetrated centrally by a tension arrangement (7), which connects the lower end of the carrier (1) to the hydraulic piston (6) in an adjustable manner, **characterized in that** the equalization device consists of an upper bearing shell (3), a lower bearing shell (5), a cage (9) and of balls (4) inserted into the cage and between the two bearing shells.

2. Friction transmission according to claim 1, **characterized in that** to adjust the tension force of the tension arrangement (7) a tensioning device (8) is provided.

3. Friction transmission according to claim 2, **characterized in that** the tensioning device (8) is a tensioning screw.

## Revendications

1. Transmission à roues de friction variable en continu, comprenant :
un carter,
un arbre d'entrée,
un arbre de couple disposé coaxialement au premier,
deux poulies d'entrée comportant des surfaces intérieures toroïdales, disposées coaxialement à l'arbre d'entrée,
deux poulies de sortie comportant des surfaces intérieures toroïdales, disposées coaxialement à l'arbre d'entrée,
dans laquelle une poulie d'entrée et une poulie de sortie forment à chaque fois une paire et les deux poulies de sortie sont disposées symétriquement l'une de l'autre comme un objet et son image dans un miroir et l'une à côté de l'autre,
plusieurs roues de friction, qui sont disposées mobiles en mouvement de pivotement entre les surfaces intérieures des paires composées de poulies d'entrée et de poulies de sortie, pour transmettre un couple de la poulie d'entrée à la poulie de sortie correspondante,
un support pour chaque roue de friction,
un dispositif de pivotement pour les supports de roues de friction,
un dispositif de pression pour une des poulies d'entrée, servant à solliciter cette dernière en direction d'une poulie de sortie,
un arbre de sortie, et
un dispositif à engrenages entre les poulies de sortie et l'arbre d'entrée, dans lequel un dispositif de compensation est prévu entre l'extrémité inférieure de chaque support (1) des roues de friction (2) et le piston hydraulique (6), et
dans lequel le dispositif de compensation est traversé en son centre par un dispositif de traction (7) qui relie l'extrémité inférieure du support (1) au piston hydraulique (6) d'une façon réglable,
**caractérisée en ce que** le dispositif de compensation est composé d'une cuvette de palier supérieure (3), d'une cuvette de palier inférieure (5), d'une cage (9) et de billes (4) mises en place dans la cage et entre les deux cuvettes de palier.

2. Transmission à roues de friction selon la revendication 1, **caractérisée en ce que**, pour le réglage de la force de serrage du dispositif de traction (7), il est prévu un dispositif de serrage (8).

3. Transmission à roues de friction selon la revendication 2, **caractérisée en ce que** le dispositif de serrage (8) est une vis de serrage.
